**Europäisches Patentamt**

(19) **European Patent Office**

**Office européen des brevets**

(11) Numéro de publication: **0 288 367 B1**

(12) **FASCICULE DE BREVET EUROPEEN**

(45) Date de publication du fascicule du brevet:
**27.12.90**

(51) Int. Cl.⁵: **E05F 11/44,** F16C 33/10,
F16C 11/04

(21) Numéro de dépôt: **88400927.5**

(22) Date de dépôt: **15.04.88**

(54) **Palier tournant pour bras de lève-vitre de véhicule automobile.**

(30) Priorité: **21.04.87 FR 8705628**

(43) Date de publication de la demande:
**26.10.88 Bulletin 88/43**

(45) Mention de la délivrance du brevet:
**27.12.90 Bulletin 90/52**

(84) Etats contractants désignés:
**DE ES GB IT SE**

(56) Documents cités:
**DE-B- 2 321 185
FR-A- 2 392 271
FR-A- 2 528 366
US-A- 4 251 182**

(73) Titulaire: **ROCKWELL AUTOMOTIVE BODY
SYSTEMS-FRANCE EN ABREGE:ROCKWELL
ABS-FRANCE, Tour Gan Cédex 13, F-92082 Paris La
Defense 2(FR)**

(72) Inventeur: **Dauvergne, Jean, 6, Allée Maryse Hilsz,
F-95470 Fosses(FR)**

(74) Mandataire: **Kohn, Philippe et al, c/o CABINET
LAVOIX 2, place d'Estienne d'Orves, F-75441 Paris
Cédex 09(FR)**

## Description

La présente invention a pour objet un palier tournant pour le montage d'un premier bras de lève-vitre sur un second bras muni d'un trou cylindrique traversant qui reçoit un tourillon constitué d'un premier épaulement cylindrique faisant saillie depuis la surface latérale du premier bras et d'un second épaulement cylindrique faisant saillie depuis une pièce complémentaire de retenue, les deux épaulements étant reliés mécaniquement entre eux par leurs surfaces planes en vis à vis de manière à emprisonner ledit second bras.

L'invention concerne un palier tournant du type que vient d'être décrit utilisé dans un dispositif lève-vitre pour véhicule automobile comprenant deux bras en X disposé, à l'intérieur de la portière du véhicule et supportant la vitre correspondante. Parmi ces deux bras, l'un est menant et l'autre mené, le bras menant étant fixé à l'une de ses extrémités sur un support suceptible d'être entraîné en rotation.

Ces deux bras sont habituellement réalisés en tôle, le bras mené étant constitué de deux parties, situées de part et d'autre du bras menant et sur chacune desquelles est formé un épaulement cylindrique. Un tel agencement est connu du document FR-A 2 528 366 correspondant au préambule de la revendication 1. Lors de l'assemblage des deux parties, les deux épaulements cylindriques sont reliés mécaniquement entre eux par une opération de soudage par pression de leurs surfaces annulaires en vis-à-vis. Dans ce type d'application, le palier tournant ainsi réalisé est soumis, durant la vie du véhicule, à de très fortes attaques de corrosion notamment du fait du phénomène de brouillard salin. Lors de l'opération de soudage, la protection initiale des tôles revêtues, par exemple par galvanisation, est très souvent endommagée et ne suffit plus à assurer une protection suffisante du palier contre la corrosion. L'apparition du phénomène de corrosion et notamment la formation de sels de zinc provoque un "gonflement du tourillon" qui peut aboutir à un coincement du palier.

La présente invention a pour but de proposer un palier tournant de réalisation simple mais qui permette par l'introduction d'un agent lubrifiant et protecteur, après l'opération de fixation mécanique des divers composants du palier, d'assurer une protection à long terme du palier.

Dans ce but l'invention propose un palier tournant caractérisé en ce que lesdites surfaces planes sont des surfaces pleines en forme de disques et en ce que l'un desdits épaulements comporte un orifice axial d'introduction d'un agent lubrifiant qui débouche à la surface plane de cet épaulement pour alimenter en agent lubrifiant un canal de distribution, formé dans au moins une des deux surfaces planes, qui communique avec la périphérie du tourillon.

Grâce à cette conception, il est possible d'introduire un agent lubrifiant sous pression par l'orifice axial, par exemple de la graisse, qui, au travers du canal de distribution, pénètre dans le palier proprement dit, c'est à dire entre la surface cylindrique externe du tourillon et la surface cylindrique en vis à vis du trou, puis qui peut s'étendre sur les faces latérales du premier bras autours du palier tournant afin d'en protéger au maximum les surfaces actives contre les risques de corrosion.

D'autres caractéristiques et avantages de l'invention apparaitront à la lecture de la description qui va suivre pour la compréhension de laquelle on pourra se repporter aux dessins annexés dans lesquels:

- la figure 1 est une vue d'un dispositif lève-vitre électrique pour véhicule automobile de l'état de la technique,
- la figure 2 est une vue, à échelle agrandie, d'un palier tournant réalisé conformément aux enseignements de la présente invention pour l'articulation des bras du lève-vitre de la figure 1, et
- la figure 3 est une vue en coupe, à très grande échelle, selon la ligne 3-3 de la figure 2.

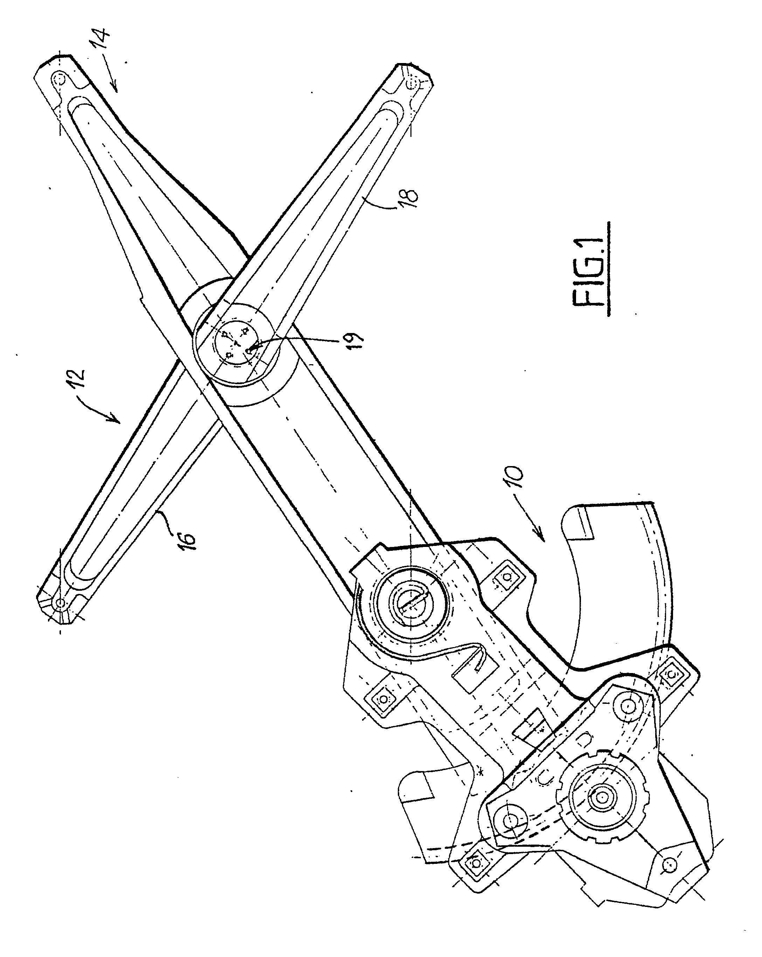

On a représenté à la figure 1 un dispositif lève-vitre électrique 10 pour véhicule automobile, qui comprend deux bras 12 et 14 disposés à l'intérieur de la portière ( non représentée) du véhicule. Le premier bras 12 est un bras mené réalisé en deux demi-bras 16 et 18 qui sont soudées entre elles par des points de soudage par pression 19. D'une manière classique, les deux demi-bras 16 et 18 sont reliés par deux portions cylindriques, obtenues par découpe partielle de la tôle qui les constitue, qui pénètrent dans un trou cylindrique traversant du bras menant 14 de façon à constituer un palier tournant.

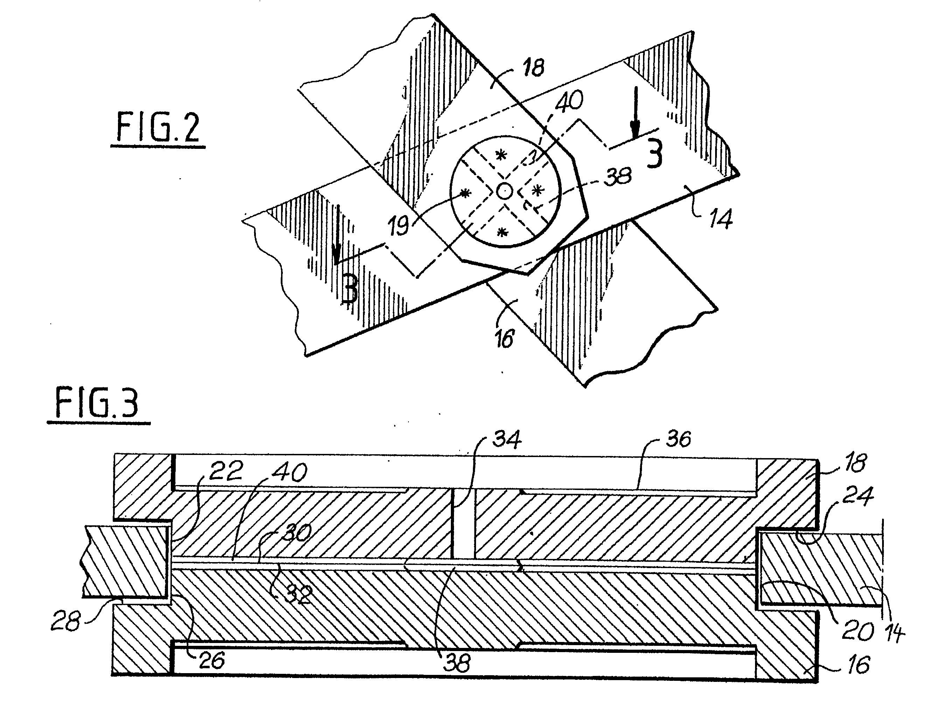

On a représenté aux figures 2 et 3 de, manière simplifiée, un palier tournant pour le montage de bras de lève-vitre réalisé conformément aux enseignements de la présente invention. Le second bras 14, le bras menant, comporte un trou cylindrique traversant 20 obtenu par découpe, lors de l'opération d'emboutissage de la tôle métallique dans laquelle est formé le bras 14. Le premier bras, ou bras mené, 12 est constitué de deux demi-bras, tous deux également réalisés par emboutissage d'une tôle métallique. A l'une de ses extrémités, la première partie 18 du premier bras comporte un premier épaulement cylindrique 22 qui fait saillie depuis sa surface latérale plane 24 et qui pénètre dan le trou cylindrique 20 du bras 14 de manière à constituer l'une des parties du tourillon cylindrique de palier tournant. Le premier épaulement cylindrique 22 est également obtenu par semi-découpe, au moyen d'un outil de forme appropriée, lors de l'opération d'emboutissage et de formage de la partie 18.

Afin de compléter le tourillon de palier, et de manière à emprisonner la tôle du bras 14, la seconde partie de bras 16 qui constitue la pièce complémentaire de retenue du palier, comporte également un épaulement cylindrique 26 qui fait saillie depuis sa face latérale plane 28. Le second épaulement cylindrique 26 est réalisé selon le même procédé que le premier épaulement cylindrique 22.

Les deux épaulements cylindriques 22 et 26 sont reliés mécaniquement entre eux par une opération de soudage par pression qui assure la liaison mécanique entre leurs deux surfaces planes respectives en forme de disques pleins 30 et 32 disposées en vis à vis l'une de l'autre de manière à emprisonner la tôle du bras 14, tout en ménageant un léger jeu axial du palier, comme on peut le constater à la figure 3. De la même manière, les épaulements cylindriques 22 et 26 ont un diamètre commun légèrement inférieur à celui du trou traversant 20 de façon à ménager un léger jeu radial du palier.

Conformément à la présente invention, l'épaulement cylindrique 22 de la première partie du bras 18 comporte un orifice axial d'introduction d'un agent lubrifiant et de protection 34. L'orifice 34, qui est également découpé lors de l'opération d'emboutissage de la première partie de bras 18, s'étend axialement au centre géométrique de l'épaulement cylindrique 22 depuis la surface plane 36 de la première partie de bras 18, vers la surface plane 30 de l'épaulement cylindrique 22. L'orifice 34 débouche à la surface plane 30 pour alimenter en agent lubrifiant deux canaux de distribution 38 et 40. Dans le mode de réalisation représenté aux figures, les canaux de distribution 38 et 40 sont deux canaux diamètraux perpendiculaires entre eux qui communiquent par leurs extrémités diamétralement opposées avec la périphérie du tourillon de palier constitué par les deux épaulements cylindriques 22 et 26.

Dans le mode de réalisation représenté à la figure 3, les canaux de distribution 38 et 40 sont formés, de manière symétrique, dans chacune des deux surfaces planes 30 et 32 des tourillons cylindriques 22 et 26. Cette réalisation permet d'augmenter notablement la section de passage des canaux de distribution 38 et 40 sans augmenter la complexité de réalisation des pièces en tôle métalliques, les canaux étant obtenus à l'aide d'une empreinte lors des opérations d'emboutissage et de découpe.

Les deux épaulements cylindriques sont reliés entre eux par une opération de soudage par pression, les points de soudage 19 étant répartis dans les zones des surfaces planes 30 et 32 dans lesquelles ne sont pas formés les canaux 38 et 40, comme on peut le constater à la figure 2.

La présente invention n'est pas limitée au mode de réalisation qui vient d'être décrit, elle peut en différer largement, notamment en se qui concerne les canaux de distribution qui peuvent revêtir différentes formes et répartitions de manière à amener l'agent lubrifiant introduit sous pression dans l'orifice 34 à la périphérie cylindrique du tourillon de palier comme cela a été mentioné plus haut. L'augmentation des sections et du nombre de canaux de distribution permet également d'augmenter la quantité de graisse introduite pour constituer une réserve d'agent lubrifiant et protecteur plus importante.

**Revendications**

1. Palier tournant pour le montage d'un premier bras de lève-vitre sur un second bras (14) muni d'un trou cylindrique traversant (20) qui reçoit un tourillon constitué d'un premier épaulement cylindrique (22) faisant saillie depuis la surface latérale (24) du premier bras et d'un second épaulement cylindrique (26) faisant saillie depuis une pièce (16) complémentaire de retenue, les deux épaulement (22, 26) étant reliés mécaniquement entre eux par leur surfaces planes en vis à vis (30, 32) de manière à emprisonner ledit second bras, caractérisé en ce que lesdites surfaces planes sont des surfaces pleines en forme de disques et en ce que l'un desdits épaulements (22) comporte un orifice axial (34) d'introduction d'un agent lubrifiant qui débouche à la surface plane de cet épaulement (30) pour alimenter en agent lubrifiant un canal de distribution (38, 40), formé dans au moins une des deux surfaces planes (30, 32), qui communique avec la périphérie du tourillon.

2. Palier selon la revendication 1, caractérisé en ce que chacune desdites deux surfaces planes (30, 32) comporte au moins un canal de distribution (38, 40) d'agent lubrifiant reliant ledit orifice (34) d'introduction à la périphérie du tourillon.

3. Palier selon la revendication 1 ou 2 caractérisé en ce ledit canal de distribution est composé de deux canaux diamétraux perpendiculaires (38, 40), ledit orifice (34) débouchant au centre de l'épaulement cylindrique (22).

4. Palier selon l'une quelconque des revendications précédentes caractérisé en ce que les deux bras et la pièce complémentaire de retenue sont réalisés en tôle, les deux surfaces planes (30, 32) des épaulements (22, 26) étant reliées entre elles par une opération de soudage.

5. Palier selon l'une quelconque des revendications précédentes caractérisé en ce que la pièce complémentaire de retenue est une pièce en forme de bras (16) qui est ainsi reliée au premier bras pour constituer un bras unique (12) monté pivotant sur ledit second bras (14).

**Patentansprüche**

1. Drehlager für die Anbringung eines ersten Fensterheberarms auf einem zweiten Arm (14), welcher mit einem zylindrischen Durchgangsloch (20) versehen ist, welches einen Lagerzapfen aufnimmt, der durch einen von der Seitenfläche (24) des ersten Arms her vorspringenden ersten zylindrischen Absatz (22) und einen von einem komplementären Halteteil (16) her vorspringenden zweiten zylindrischen Absatz (26) gebildet ist, wobei die beiden Absätze (22, 26) über ihre ebenen einander zugekehrten Flächen (30, 32) mechanisch miteinander so verbunden sind, daß sie den zweiten Arm einschließen, dadurch gekennzeichnet, daß die ebenen Flächen Vollflächen in Scheibenform sind und daß einer dieser Absätze (22) eine Axialöffnung (34) zum Einführen eines Gleitmittels aufweist, welche an der ebenen Fläche dieses Absatzes (30) zur Speisung eines in wenigstens einer der beiden ebenen Flächen (30, 32) ausgebildeten Verteilkanals (38, 40), welcher mit dem Rand des Lagerzapfens in Verbindung steht, mit Schmiermittel mündet.

2. Lager nach Anspruch 1, dadurch gekennzeichnet, daß jede der beiden ebenen Flächen (30, 32) wenigstens einen die Einführöffnung (34) mit dem Rand des Lagerzapfens verbindenden Schmiermittelverteilkanal (38, 40) aufweist.

3. Lager nach Anspruch 1 oder 2, dadurch gekennzeichnet, daß der Verteilkanal aus zwei diametralen senkrechten Kanälen (38, 40) aufgebaut ist, wobei die Öffnung (34) in der Mitte des zylindrischen Absatzes (22) mündet.

4. Lager nach irgendeinem der vorstehenden Ansprüche, dadurch gekennzeichnet, daß die beiden Arme und das komplementäre Halteteil aus Blech hergestellt sind, wobei die beiden ebenen Flächen (30, 32) der Absätze (22, 26) durch einen Schweißvorgang miteinander verbunden sind.

5. Lager nach irgendeinem der vorstehenden Ansprüche, dadurch gekennzeichnet, daß das komplementäre Halteteil ein Teil in Form eines Arms (16) ist, der so mit dem ersten Arm verbunden ist, daß ein schwenkbar auf dem zweiten Arm (14) angebrachter einziger Arm (12) gebildet wird.

**Claims**

1. Pivot bearing for the fitting of a first window wiper arm on a second arm (14) provided with a through cylindrical hole (20), which receives a journal constituted by a first cylindrical shoulder (22) projecting from the lateral surface (24) of the first arm and a second cylindrical shoulder (26) projecting from a complementary retaining part (16), the two shoulders (22, 26) being mechanically interconnected by their planar facing surfaces (30, 32) in order to confine the said second arm, characterized in that said planar surfaces are solid surfaces in the form of disks and in that one of the said shoulders (22) has an axial orifice (34) for the introduction of a lubricant, which issues on to the planar surface of said shoulder (30) for supplying lubricant to a distributing channel (38, 40) formed in at least one of the two planar surfaces (30, 32), which communicates with the periphery of the journal.

2. Bearing according to claim 1, characterized in that each of the said two planar surfaces (30, 32) has at least one lubricant distributing channel (38, 40) connecting said introduction orifice (34) to the periphery of the journal.

3. Bearing according to claims 1 or 2, characterized in that said distributing channel is formed from two perpendicular, diametrical channels (38, 40), said orifice (34) issuing into the centre of the cylindrical shoulder (22).

4. Bearing according to any one of the preceding claims, characterized in that the two arms and the complementary retaining part are made from sheet metal, the two planar surfaces (30, 32) of the shoulders (22, 26) being interconnected by a welding operation.

5. Bearing according to any one of the preceding claims, characterized in that the complementary retaining part is in the form of an arm (16), which is thus connected to the first arm in order to constitute a single arm (12) mounted in pivoting manner on said second arm (14).

FIG.1

FIG.2

FIG.3

EP 0 288 367 B1